(19) Europäisches Patentamt
European Patent Office
Office européen des brevets

(11) **EP 3 924 194 B1**

(12) **EUROPEAN PATENT SPECIFICATION**

(45) Date of publication and mention
of the grant of the patent:
**07.06.2023 Bulletin 2023/23**

(21) Application number: **19828581.9**

(22) Date of filing: **09.12.2019**

(51) International Patent Classification (IPC):
**B60B 15/28** (2006.01)   **F16F 15/32** (2006.01)

(52) Cooperative Patent Classification (CPC):
**B60B 15/28**

(86) International application number:
**PCT/EP2019/084244**

(87) International publication number:
**WO 2020/164777 (20.08.2020 Gazette 2020/34)**

(54) **TRACTION CONTROL SYSTEM FOR VEHICLE**

ANTRIEBSKRAFTKONTROLLSYSTEM FÜR FAHRZEUG

SYSTÈME DE CONTRÔLE DE LA TRACTION POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.02.2019 IN 201941005228**

(43) Date of publication of application:
**22.12.2021 Bulletin 2021/51**

(73) Proprietor: **VOLVO TRUCK CORPORATION
405 08 Göteborg (SE)**

(72) Inventor: **PURUSHOTHAMA, Kaveesha
Bengaluru 560043 Karnataka (IN)**

(74) Representative: **Kransell & Wennborg KB
P.O. Box 2096
403 12 Göteborg (SE)**

(56) References cited:
**EP-A1- 2 913 555      DE-C- 678 399
KR-U- 19980 031 694   US-A- 3 280 637
US-A1- 2005 110 331**

## Description

### TECHNICAL FIELD

The invention relates to a traction control system for controlling a contact force between a wheel rotating around a wheel rotation axis and a contact surface, and to a vehicle comprising such a traction control system.

The invention can be applied in heavy-duty vehicles, such as trucks, buses and construction equipment. Although the invention will be described with respect to a truck, the invention is not restricted to this particular vehicle, but may also be used in other vehicles, for instance buses or various kinds of working vehicles, such as wheel loaders, excavators, or articulated haulers etc.

### BACKGROUND

The ability to effectively brake is essential for safe driving of any vehicle. Much development has been carried out to prevent the brakes from locking, and to increase the friction between the road and the tires. However, it would be desirable to provide for an improved braking capability of a vehicle.

US 2005/0110331 relates to a balance weight and a balance-correcting structure for a spoke wheel.

### SUMMARY

An object of the invention is to provide for an improved braking capability of a vehicle.

According to a first aspect of the invention, this object is achieved by a traction control system, for controlling a contact force between a wheel rotating around a wheel rotation axis and a contact surface, the traction control system comprising: at least a first weight controllable to move around the wheel rotation axis when the traction control system is coupled to the wheel; and a weight guiding arrangement configured to guide the first weight in such a way that, when the first weight moves around the wheel rotation axis, a center of mass of the first weight follows a first path defined by the weight guiding arrangement, wherein the first path exhibits a first portion with a first radius of curvature, and a second portion with a second radius of curvature, larger than the first radius of curvature.

The first portion with the first radius of curvature and the second portion with the second radius of curvature may be angularly spaced apart by at least 90°, and advantageously by approximately 180°.

The present invention is based on the realization that the friction between tire and road can be increased by increasing the contact force between the tire and the road, and that this can be achieved by moving a weight around the wheel rotation axis in such a way that a net centrifugal force provided by the movement of the weight is directed towards the road. The present inventor has further realized that this can be achieved by means of a traction control system with a weight guiding arrangement configured to guide at least one weight along a path defining different radii of curvature in different segments of the path. A transition from a smaller radius of curvature to a larger radius of curvature will result in a transition to a larger centrifugal force, given that the angular speed of the weight is substantially constant.

According to a preferred embodiment, of the traction control system of the present invention, the weight guiding arrangement may comprise a first guiding member coupled to the first weight and arranged to rotate around the wheel rotation axis, when the traction control system is coupled to the wheel, the first guiding member defining the second portion of the path having the second radius of curvature; and a second guiding member, coupled to the first guiding member and to the first weight, and arranged to rotate, in response to the rotation of the first guiding member, around a weight rotation axis, parallel to and offset from the wheel rotation axis, the second guiding member defining the first portion of the path having the first radius of curvature.

The first weight may be coupled to the first guiding member in such a way that the first weight moves around the wheel rotation axis in response to the rotation of the first guiding member.

The first weight may be coupled to the first guiding member in such a way that the first weight is radially movable in relation to the first guiding member; and the first weight may be coupled to the second guiding member in such a way that the first weight is radially movable in relation to the second guiding member.

According a preferred embodiment, the traction control system may comprises a second weight controllable to move around the wheel rotation axis when the traction control system is coupled to the wheel; and the weight guiding arrangement may be configured to guide the second weight in such a way that, when the second weight moves around the wheel rotation axis, a center of mass of the second weight follows a second path defined by the weight guiding arrangement, wherein the second path exhibits a first portion with a first radius of curvature, and a second portion with a second radius of curvature, greater than the first radius of curvature.

With additional weights, the desired higher contact force between tire and road can be achieved with a higher frequency, for a given rotational speed of the weights.

The first radius of curvature of the second path may be substantially equal to the first radius of curvature of the first path; and the second radius of curvature of the second path may be substantially equal to the second radius of curvature of the first path.

The second path of the center of mass of the second weight may be substantially identical to the first path of the center of mass of the first weight.

Where the traction control system comprises more than one weight, the weights comprised in the traction control system may advantageously be substantially evenly angularly distributed around the wheel rotation axis.

According a preferred embodiment, the traction control system may comprise a first weight, a second weight and a third weight; and the weight guiding arrangement may comprise: a first guiding member arranged to rotate around the wheel rotation axis, the first guiding member comprising a first radially extending slit accommodating the first weight, restricting the first weight to move along the first radially extending slit, and defining a first maximum distance between the wheel rotation axis and the first weight; a second radially extending slit accommodating the second weight, restricting the second weight to move along the second radially extending slit, and defining a second maximum distance between the wheel rotation axis and the second weight; and a third radially extending slit accommodating the third weight, restricting the third weight to move along the third radially extending slit, and defining a third maximum distance between the wheel rotation axis and the third weight; and a second guiding member arranged to rotate around a

weight rotation axis, parallel to and offset from the wheel rotation axis. The first weight may be coupled to the second guiding member to rotate at a first maximum distance from the weight rotation axis, the second weight may be coupled to the second guiding member to rotate at a second maximum distance from the weight rotation axis, and the third weight may be coupled to the second guiding member to rotate at a third maximum distance from the weight rotation axis.

The traction control system according a preferred embodiment of the present invention may advantageously be included in a vehicle, further comprising a vehicle body; and a wheel arranged to rotate around a wheel rotation axis in relation to the vehicle body while being in contact with a contact surface. The traction control system may be controllable to be coupled to the wheel in such a way that the at least first weight of the traction control system moves around the wheel rotation axis.

Advantageously, the first path defined by the weight guiding arrangement comprised in the traction control system may exhibit the second radius of curvature between the wheel rotation axis and the contact surface, and the first radius of curvature further away from the contact surface than the wheel rotation axis.

According a preferred embodiment, the vehicle may comprise a coupling controllable to couple the traction control system to the wheel in such a way that the at least first weight moves around the wheel rotation axis in response to rotation of the wheel around the wheel rotation axis.

The vehicle may further comprise a braking system operable to apply a retardation torque to the wheel in response to a braking request; and the coupling may be configured to couple the traction control system to the wheel in response to the braking request.

According to a second aspect of the present invention, there is provided a method of controlling the vehicle according to the first aspect of the present invention, comprising the steps of: receiving a braking request; and controlling the coupling to couple the traction control system to the wheel in response to the braking request.

According to a third aspect of the invention, there is provided a computer program configured to, when run on a processor comprised in a vehicle provided with the traction control system according to the first aspect of the invention, cause the processor to carry out the steps of the method according to embodiments of the present invention.

BRIEF DESCRIPTION OF THE DRAWINGS

With reference to the appended drawings, below follows a more detailed description of embodiments of the invention cited as examples.

In the drawings:

Fig. 1 is a side view of a vehicle according to an embodiment of the present invention, in the form of a truck having a traction control system according to an embodiment of the invention.
Fig. 2 is an exploded schematic illustration of a traction control system according to an example embodiment of the invention.
Figs. 3A-C schematically illustrate operation of the traction control system in fig 2.
Fig. 4 is a block diagram schematically illustrating control of the braking system and the traction control system of the vehicle in fig 1.
Fig. 5 is a flow-chart schematically illustrating an example embodiment of the method according to the present invention.

DETAILED DESCRIPTION OF EXAMPLE EMBODIMENTS OF THE INVENTION

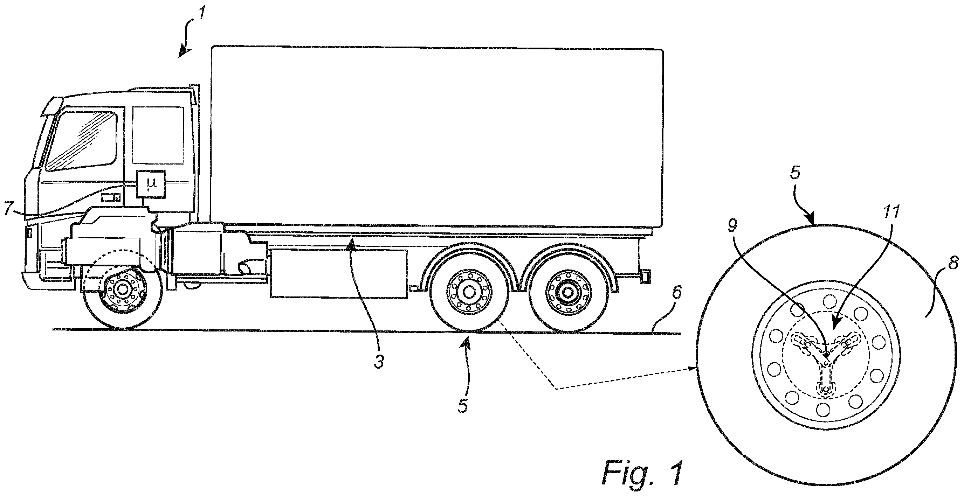

Fig 1 schematically shows a vehicle, here in the form of a truck 1, comprising a body 3 and wheels 5 arranged to rotate around a wheel rotation axis 9 in relation to the vehicle body, while being in contact with a contact surface 6. The vehicle 1 comprises a control unit 7 that is configured to at least control operation of the braking system of the vehicle 1 in response to a braking request.

As is schematically indicated in fig 1, the vehicle further comprises a traction control system 11 according to an example embodiment of the present invention. The traction control system 11 is controllable, by the control unit 7, to be coupled to the wheel 5 to increase traction between the tire 8 of the wheel 5 and the contact surface 6. How this increased traction may be achieved will be described in greater detail further below.

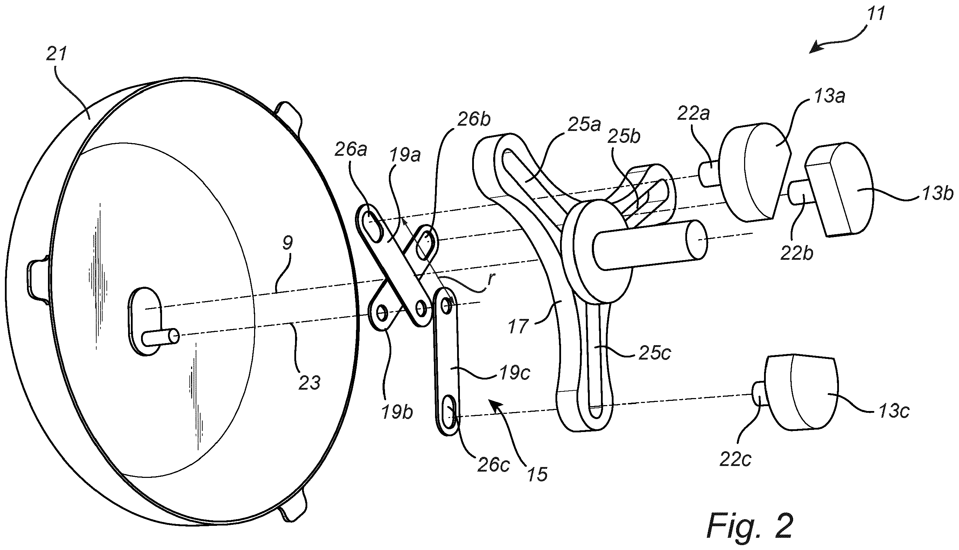

Fig. 2 is an exploded schematic illustration of the traction control system 11 according to an example embodiment of the invention. Referring to fig 2, the traction control system 11 comprises a solid first weight 13a, a solid second weight 13b, and a solid third weight 13c, a weight guiding arrangement 15, to which the weights 13a-c are coupled, and a housing 21.

The weight guiding arrangement 15 comprises a first guiding member 17, and second guiding members 19a-c. The first guiding member 17 is arranged to rotate around the wheel rotation axis 9, when installed in a vehicle 1, and each of the second guiding members 19a-c is arranged to rotate around a weight rotation axis 23, which is parallel to and offset from the wheel rotation axis 9, as is schematically indicated in fig 2.

The first guiding member 17 is provided with first 25a, second 25b and third 25c radially extending slits, and each of the second guiding members 19a-c has respective elongated holes 26a-c. As is schematically indicated in fig 2, each of the weights 13a-c is coupled to the first guiding member 17 and its respective second guiding member 19a-c by means of a guiding pin 22a-c that is accommodated by both a respective slit 25a-c of the first guiding member and an elongated hole 26a-c of its respective second guiding member 19a-c.

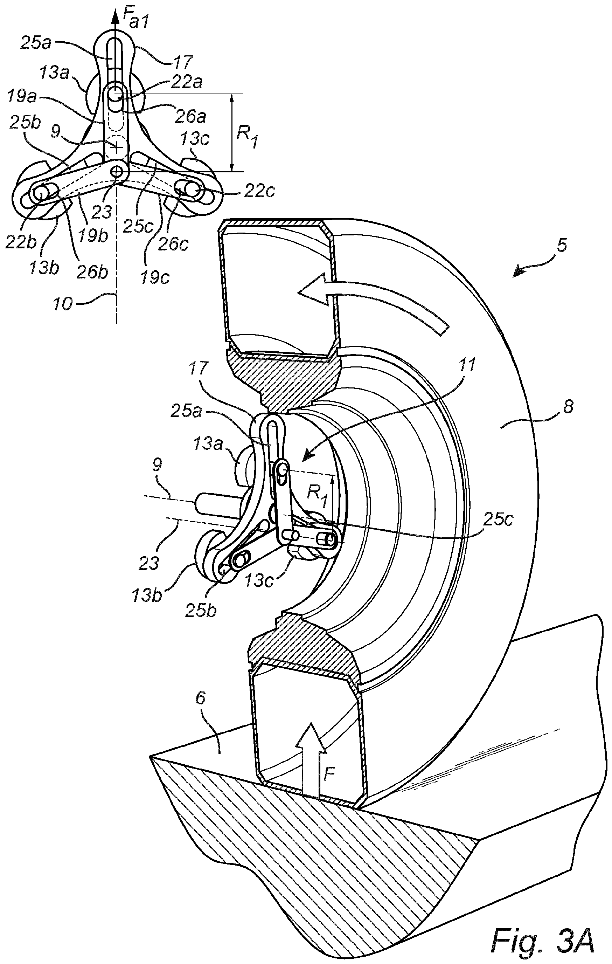

As will be apparent from the continued description below with reference to figs 3A-C, the first guiding member 17 and the second guiding members 19a-c are configured to guide the weights 13a-c along a path in which each weight experiences a rather sudden transition from a first radius $R_1$ to a second radius $R_2$, larger than the first radius $R_1$.

In figs 3A-C, the first weight 13a will be followed around a half revolution (180°) of the traction control system 11. It should be noted that this may correspond to a half revolution of the wheel 5, or that there may be some gear ratio between the rotation of the wheel 5 and the rotation of the traction control system 11. In the latter case, the traction control system 11 may, for example, be controlled to rotate faster than the wheel 5.

Referring first to fig 3A, the first weight 13a is shown to be in a first angular position in relation to the wheel rotation axis 9, which is 0° in relation to a vertical line 10 passing through the wheel rotation axis 9. In this first angular position, the first weight 13a is moving with a first angular speed $\omega_1$ along a path defined by a first radius of curvature $R_1$. As is schematically shown in fig 3A, the first radius of curvature $R_1$ is determined by the second guiding member 19a associated with the first weight 13a, and the weight rotation axis 23 is the center of rotation of the first weight 13a. This means that the current centrifugal force provided by the first weight 13a is $F_{a1} = m\omega_1^2 R_1$, where m is the mass of the first weight 13a.

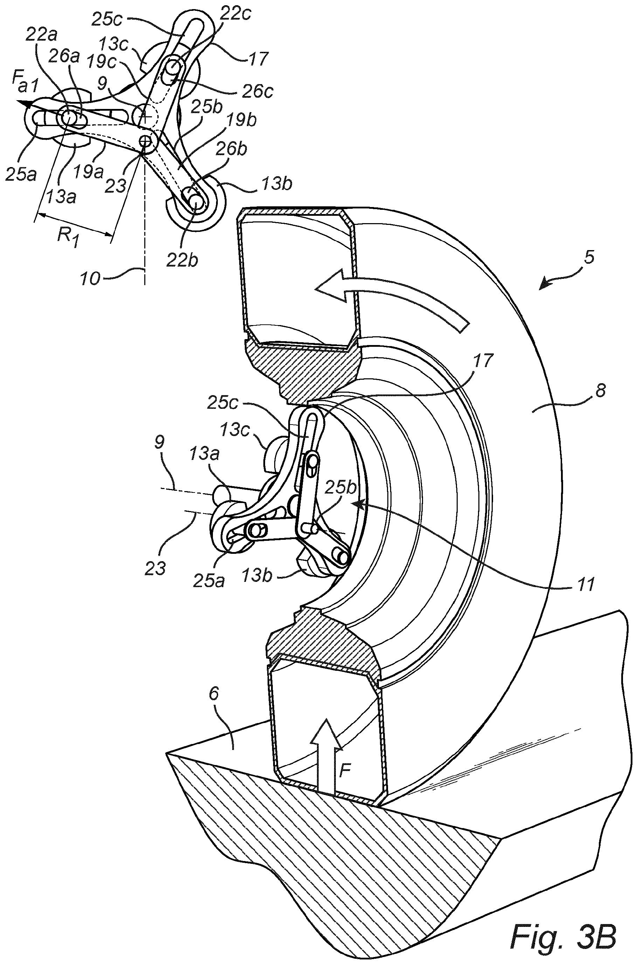

In fig 3B, the first weight 13a is shown to have moved 90° counter-clockwise in relation to the wheel rotation axis 9 (the first weight 13a has moved a slightly smaller angular distance in relation to the weight rotation axis 23) to be in a second angular position in relation to the wheel rotation axis 9 (90° in relation to the vertical line 10 passing through the wheel rotation axis 9). In this second angular position, the first weight 13a is still moving with the first angular speed $\omega_1$ along a path defined by a first radius of curvature $R_1$. Accordingly, the current centrifugal force provided by the first weight 13a is still $F_{a1}$.

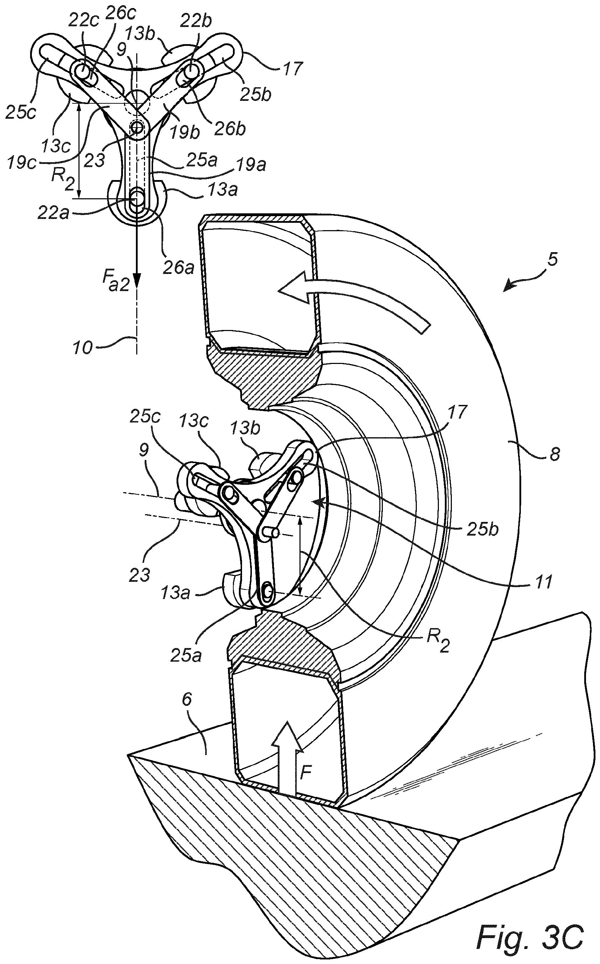

In fig 3C, the first weight 13a is shown to have moved 180° counter-clockwise in relation to the wheel rotation axis 9 to be in a third angular position in relation to the wheel rotation axis 9 (180° in relation to the vertical line 10 passing through the wheel rotation axis 9). In this third angular position, the first weight 13a is moving with a second angular speed $\omega_2$ along a path defined by a second radius of curvature $R_2$. Thanks to the elongated hole 26a of the second guiding member 19a and the dimensioning of the first radially extending slit 25a of the first guiding member 17, the second radius of curvature $R_2$ is determined by the first radially extending slit 25a of the first guiding member 17, and the wheel rotation axis 9 is the center of rotation of the first weight 13a. This means that the current centrifugal force provided by the first weight 13a is now $F_{a2} = m\omega_2^2 R_2$.

Since the second angular speed $\omega_2$ of the first weight 13a in the third angular position is only slightly lower than the first angular speed $\omega_1$ of the first weight 13a in the first angular position, and the second radius of curvature $R_2$ is considerably larger than the first radius of curvature $R_1$ ($R_2$-$R_1$=distance between the wheel rotation axis 9 and the weight rotation axis 23), the centrifugal force $F_{a2}$ provided by the first weight 13a when in the third position is larger than the centrifugal force $F_{a1}$ provided by the first weight 13a when in the first position. This means that the traction control system 11 provides a net centrifugal force directed downwards in figs 3A-C, when the traction control system is controlled to rotate around the wheel rotation axis 9.

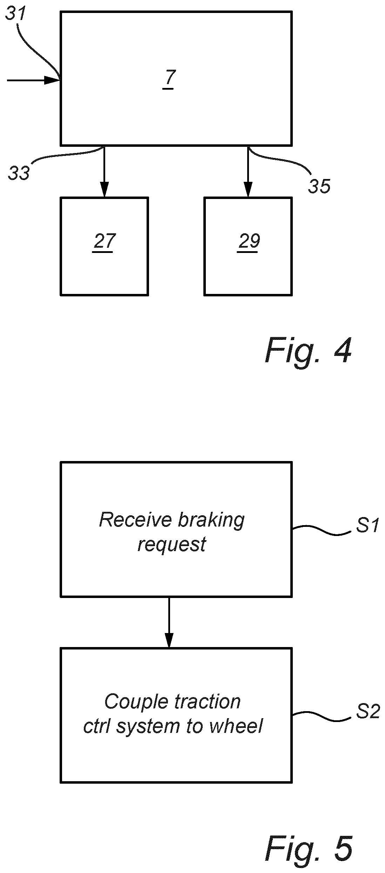

Fig. 4 is a block diagram schematically illustrating control of the braking system and the traction control system of the vehicle in fig 1. Referring to fig 4, the control unit 7 of the vehicle 1 comprises an input 31 for receiving a braking request, a first output 33 coupled to the braking system 27 of the vehicle 1, and a second output 35 coupled to a coupling 29 controllable to couple the traction control system 11 to the wheel 5 of the vehicle 1 in such a way that the at least first weight 13a-c moves around the wheel rotation axis 9 in response to rotation of the wheel 5 around the wheel rotation axis 9.

Fig. 5 is a flow-chart schematically illustrating an example embodiment of the method according to the present invention. In a first step S1, the control unit 7 receives a braking request at the input 31. In the subsequent step S2, the control unit 7 provides a braking system control signal to the first output 33 to control the braking system to apply a retardation torque to the wheel 5, and a traction control system control signal to the second output 35 to control the coupling 29 to couple the traction control system 11 to the wheel 5 as described above with reference to figs 3A-C, in response to the braking request.

It is to be understood that the present invention is not limited to the embodiments described above and illustrated in the drawings; rather, the skilled person will recognize that many changes and modifications may be made within the scope of the appended claims. For example, the traction control system 11 may comprise another number of weights than three, such as a larger number of weights. Furthermore, the weight guiding arrangement may be configured in other ways, as long as the functionality is fulfilled of transitioning the path of the weight(s) between a first radius of curvature and a second radius of curvature that is larger than the first radius of curvature.

**Claims**

1. A traction control system (11), for controlling a contact force (F) between a wheel (5) rotating around a wheel rotation axis (9) and a contact surface (6), the traction control system (11) comprising:

   at least a first weight (13a-c) controllable to move around the wheel rotation axis (9) when the traction control system (11) is coupled to the wheel (5); and **characterised by** a weight guiding arrangement (15) configured to guide the first weight (13a-c) in such a way that, when the first weight (13a-c) moves around the wheel rotation axis (9), a center of mass of the first weight (13a-c) follows a first path defined by the weight guiding arrangement (15), wherein the first path exhibits a first portion with a first radius ($R_1$) of curvature, and a second portion with a second radius ($R_2$) of curvature, larger than the first radius ($R_1$) of curvature.

2. The traction control system (11) according to claim 1, wherein the weight guiding arrangement (15) comprises:

   a first guiding member (17) coupled to the first weight (13a-c) and arranged to rotate around the wheel rotation axis (9), when the traction control system (11) is coupled to the wheel (5), the first guiding member (17) defining the second portion of the path having the second radius ($R_2$) of curvature; and a second guiding member (19a-c), coupled to the first guiding member (17) and to the first weight (13a-c), and arranged to rotate, in response to the rotation of the first guiding member (17), around a weight rotation axis (23), parallel to and offset from the wheel rotation axis (9), the second guiding member (19a-c) defining the first portion of the path having the first radius ($R_1$) of curvature.

3. The traction control system (11) according to claim 2, wherein the first weight (13a-c) is coupled to the first guiding member (17) in such a way that the first weight (13a-c) moves around the wheel rotation axis (9) in response to the rotation of the first guiding member (17).

4. The traction control system according to claim 2 or 3, wherein:

   the first weight (13a-c) is coupled to the first guiding member (17) in such a way that the first weight (13a-c) is radially movable in relation to the first guiding member (17); and the first weight (13a-c) is coupled to the second guiding member (19a-c) in such a way that the first weight (13a-c) is radially movable in relation to the second guiding member (19a-c).

5. The traction control system (11) according to any one of the preceding claims, wherein:

   the traction control system (11) comprises a second weight (13a-c) controllable to move around the wheel rotation axis (9) when the traction control system (11) is coupled to the wheel (5); and the weight guiding arrangement (15) is configured to guide the second weight (13a-c) in such a way that, when the second weight (13a-c) moves around the wheel rotation axis (9), a center of mass of the second weight (13a-c) follows a second path defined by the weight guiding arrangement (15), wherein the second path exhibits a first portion with a first radius ($R_1$) of curvature, and a second portion with a second radius ($R_2$) of curvature, greater than the first radius ($R_1$) of curvature.

6. The traction control system (11) according to claim 5, wherein:

   the first radius ($R_1$) of curvature of the second path is equal to the first radius ($R_1$) of curvature of the first path; and the second radius ($R_2$) of curvature of the second path is equal to the second radius ($R_2$) of curvature of the first path.

7. The traction control system (11) according to claim 6, wherein the second path of the center of mass of the second weight (13a-c) is identical to the first path of the center of mass of the first weight (13a-c).

8. The traction control system (11) according to claim 6 or 7, wherein the weights (13a-c) comprised in the traction control system (11) are evenly angularly distributed around the wheel rotation axis (9).

9. The traction control system (11) according to claim 1, wherein:

the traction control system (11) comprises a first weight (13a), a second weight (13b) and a third weight (13c);
the weight guiding arrangement (15) comprises:

a first guiding member (17) arranged to rotate around the wheel rotation axis (9), the first guiding member (17) comprising a first radially extending slit (25a) accommodating the first weight (13a), restricting the first weight (13a) to move along the first radially extending slit (25a), and defining a first maximum distance ($r_{max}$) between the wheel rotation axis and the first weight; a second radially extending slit (25b) accommodating the second weight (13b), restricting the second weight (13b) to move along the second radially extending slit (25b), and defining a second maximum distance ($r_{max}$) between the wheel rotation axis and the second weight; and a third radially extending slit (25c) accommodating the third weight (13c), restricting the third weight (13c) to move along the third radially extending slit (25c), and defining a third maximum distance ($r_{max}$) between the wheel rotation axis and the third weight; and
a second guiding member (19a-c) arranged to rotate around a weight rotation axis (23), parallel to and offset from the wheel rotation axis (9),

wherein the first weight (13a) is coupled to the second guiding member (19a) to rotate at a first maximum distance (r) from the weight rotation axis (23), the second weight (13b) is coupled to the second guiding member (19b) to rotate at a second maximum distance (r) from the weight rotation axis (23), and the third weight (13c) is coupled to the second guiding member (19c) to rotate at a third maximum distance (r) from the weight rotation axis (23).

10. A vehicle (1) comprising:

a vehicle body (3);
a wheel (5) arranged to rotate around a wheel rotation axis (9) in relation to the vehicle body (3) while being in contact with a contact surface (6); and
the traction control system (11) according to any one of the preceding claims controllable to be coupled to the wheel (5) in such a way that the at least first weight (13a-c) of the traction control system (11) moves around the wheel rotation axis (9).

11. The vehicle (1) according to claim 10, wherein the first path defined by the weight guiding arrangement (15) comprised in the traction control system (11) exhibits the second radius ($R_2$) of curvature between the wheel rotation axis (9) and the contact surface (6), and exhibits the first radius ($R_1$) of curvature further away from the contact surface (6) than the wheel rotation axis (9).

12. The vehicle (1) according to claim 10 or 11, wherein the vehicle (1) comprises a coupling (29) controllable to couple the traction control system (11) to the wheel (5) in such a way that the at least first weight (13a-c) moves around the wheel rotation axis (9) in response to rotation of the wheel (5) around the wheel rotation axis (9).

13. The vehicle (1) according to claim 12, wherein:

the vehicle (1) further comprises a braking system (27) operable to apply a retardation torque to the wheel (5) in response to a braking request; and
the coupling (29) is configured to couple the traction control system (11) to the wheel (5) in response to the braking request.

14. A method of controlling the vehicle (1) according to claim 13, comprising the steps of:

receiving (S1) a braking request; and
controlling (S2) the coupling (29) to couple the traction control system (11) to the wheel (5) in response to the braking request.

15. A computer program configured to, when run on a processor (7) comprised in the vehicle (1) according to claim 13, cause the processor (7) to carry out the steps of the method according to claim 14.

**Patentansprüche**

1. Antriebskraftkontrollsystem (11) zum Steuern einer Kontaktkraft (F) zwischen einem Rad (5), das sich um eine Raddrehachse (9) dreht, und einer Kontaktfläche (6), das Antriebskraftkontrollsystem (11) umfassend:

mindestens ein erstes Gewicht (13a-c), das steuerbar ist, um sich um die Raddrehachse (9) zu bewegen, wenn das Antriebskraftkontrollsystem (11) mit dem Rad (5) gekoppelt ist; und **ge-**

**kennzeichnet durch**

eine Gewichtsführungsanordnung (15), die konfiguriert ist, um das erste Gewicht (13a-c) so zu führen, dass, wenn sich das erste Gewicht (13a-c) um die Raddrehachse (9) bewegt, ein Massenschwerpunkt des ersten Gewichts (13a-c) einem ersten Pfad folgt, der durch die Gewichtsführungsanordnung (15) definiert ist, wobei der erste Pfad einen ersten Abschnitt mit einem ersten Krümmungsradius ($R_1$) und einen zweiten Abschnitt mit einem zweiten Krümmungsradius ($R_2$) aufweist, der größer als der erste Krümmungsradius ($R_1$) ist.

2. Antriebskraftkontrollsystem (11) nach Anspruch 1, wobei die Gewichtsführungsanordnung (15) umfasst:

   ein erstes Führungselement (17), das mit dem ersten Gewicht (13a-c) gekoppelt und so angeordnet ist, dass es sich um die Raddrehachse (9) dreht, wenn das Antriebskraftkontrollsystem (11) mit dem Rad (5) gekoppelt ist, wobei das erste Führungselement (17) den zweiten Abschnitt des Pfades mit dem zweiten Krümmungsradius ($R_2$) definiert; und
   ein zweites Führungselement (19a-c), das mit dem ersten Führungselement (17) und dem ersten Gewicht (13a-c) gekoppelt und so angeordnet ist, dass es sich in Reaktion auf die Drehung des ersten Führungselements (17) um eine Gewichtsdrehachse (23) dreht, die parallel zu und versetzt von der Raddrehachse (9) verläuft, wobei das zweite Führungselement (19a-c) den ersten Abschnitt des Pfades mit dem ersten Krümmungsradius ($R_1$) definiert.

3. Antriebskraftkontrollsystem (11) nach Anspruch 2, wobei das erste Gewicht (13a-c) mit dem ersten Führungselement (17) so gekoppelt ist, dass sich das erste Gewicht (13a-c) in Reaktion auf die Drehung des ersten Führungselements (17) um die Raddrehachse (9) bewegt.

4. Antriebskraftkontrollsystem nach Anspruch 2 oder 3, wobei:

   das erste Gewicht (13a-c) mit dem ersten Führungselement (17) so gekoppelt ist, dass das erste Gewicht (13a-c) in Bezug auf das erste Führungselement (17) radial bewegbar ist; und
   das erste Gewicht (13a-c) mit dem zweiten Führungselement (19a-c) so gekoppelt ist, dass das erste Gewicht (13a-c) in Bezug auf das zweite Führungselement (19a-c) radial bewegbar ist.

5. Antriebskraftkontrollsystem (11) nach einem der vorhergehenden Ansprüche, wobei:

das Antriebskraftkontrollsystem (11) mindestens ein zweites Gewicht (13a-c) umfasst, das steuerbar ist, um sich um die Raddrehachse (9) zu bewegen, wenn das Antriebskraftkontrollsystem (11) mit dem Rad (5) gekoppelt ist; und
die Gewichtsführungsanordnung (15) konfiguriert ist, um das erste Gewicht (13a-c) so zu führen, dass, wenn sich das zweite Gewicht (13a-c) um die Raddrehachse (9) bewegt, ein Massenschwerpunkt des zweiten Gewichts (13a-c) einem zweiten Pfad folgt, der durch die Gewichtsführungsanordnung (15) definiert ist, wobei der zweite Pfad einen ersten Abschnitt mit einem ersten Krümmungsradius ($R_1$) und einen zweiten Abschnitt mit einem zweiten Krümmungsradius ($R_2$) aufweist, der größer als der erste Krümmungsradius ($R_1$) ist.

6. Antriebskraftkontrollsystem (11) nach Anspruch 5, wobei:

   der erste Krümmungsradius ($R_1$) des zweiten Pfades gleich dem ersten Krümmungsradius ($R_1$) des ersten Pfades ist; und
   der zweite Krümmungsradius ($R_2$) des zweiten Pfades gleich dem zweiten Krümmungsradius ($R_2$) des ersten Pfades ist.

7. Antriebskraftkontrollsystem (11) nach Anspruch 6, wobei der zweite Pfad des Massenschwerpunkts des zweiten Gewichts (13a-c) identisch mit dem ersten Pfad des Massenschwerpunkts des ersten Gewichts (13a-c) ist.

8. Antriebskraftkontrollsystem (11) nach Anspruch 6 oder 7, wobei die im Antriebskraftkontrollsystem (11) enthaltenen Gewichte (13a-c) gleichmäßig winkelmäßig um die Raddrehachse (9) verteilt sind.

9. Antriebskraftkontrollsystem (11) nach Anspruch 1, wobei:

   das Antriebskraftkontrollsystem (11) ein erstes Gewicht (13a), ein zweites Gewicht (13b) und ein drittes Gewicht (13c) umfasst;
   die Gewichtsführungsanordnung (15) umfasst:

   ein erstes Führungselement (17), das so angeordnet ist, dass es sich um die Raddrehachse (9) dreht, wobei das erste Führungselement (17) einen ersten sich radial erstreckenden Schlitz (25a) umfasst, der das erste Gewicht (13a) aufnimmt, die Bewegung des ersten Gewichts (13a) entlang des ersten sich radial erstreckenden Schlitzes (25a) begrenzt und einen ersten maximalen Abstand ($r_{max}$) zwischen der Raddrehachse und dem ersten Gewicht definiert; einen zweiten sich radial erstreckenden Schlitz (25b), der das zweite Gewicht (13b) aufnimmt, die Bewegung des zweiten Gewichts (13b) entlang des zweiten sich radial erstreckenden Schlitzes (25b) begrenzt und einen zweiten maximalen Abstand ($r_{max}$) zwischen der Raddrehachse und dem zweiten Gewicht definiert; und einen dritten sich radial erstreckenden Schlitz (25c), der das dritte Gewicht (13c) aufnimmt, die Bewegung des dritten Gewichts (13c) entlang des dritten sich radial erstreckenden Schlitzes (25c) begrenzt und einen dritten maximalen Abstand ($r_{max}$) zwischen der Raddrehachse und dem dritten Gewicht definiert; und ein zweites Führungselement (19a-c), das so angeordnet ist, dass es sich um eine Gewichtsdrehachse (23) dreht, die parallel zur Raddrehachse (9) und versetzt zu dieser verläuft,

wobei das erste Gewicht (13a) mit dem zweiten Führungselement (19a) gekoppelt ist, um in einem ersten maximalen Abstand (r) von der Gewichtsdrehachse (23) zu drehen, das zweite Gewicht (13b) mit dem zweiten Führungselement (19b) gekoppelt ist, um in einem zweiten maximalen Abstand (r) von der Gewichtsdrehachse (23) zu drehen, und das dritte Gewicht (13c) mit dem zweiten Führungselement (19c) gekoppelt ist, um in einem dritten maximalen Abstand (r) von der Gewichtsdrehachse (23) zu drehen.

10. Fahrzeug (1) umfassend:

einen Fahrzeugaufbau (3);
ein Rad (5), das so angeordnet ist, dass es sich um eine Raddrehachse (9) in Bezug auf den Fahrzeugaufbau (3) dreht, während es in Kontakt mit einer Kontaktfläche (6) ist; und
das Antriebskraftkontrollsystem (11) nach einem der vorhergehenden Ansprüche, das so steuerbar ist, dass es mit dem Rad (5) gekoppelt ist, so dass sich das mindestens erste Gewicht (13a-c) des Antriebskraftkontrollsystems (11) um die Raddrehachse (9) bewegt.

11. Fahrzeug (1) nach Anspruch 10, wobei der erste Pfad, der durch die im Antriebskraftkontrollsystem (11) enthaltene Gewichtsführungsanordnung (15) definiert ist, den zweiten Krümmungsradius ($R_2$) zwischen der Raddrehachse (9) und der Kontaktfläche (6) aufweist und den ersten Krümmungsradius ($R_1$) weiter von der Kontaktfläche (6) entfernt als die Raddrehachse (9) aufweist.

12. Fahrzeug (1) nach Anspruch 10 oder 11, wobei das Fahrzeug (1) eine Kupplung (29) umfasst, die steuerbar ist, um das Antriebskraftkontrollsystem (11) mit dem Rad (5) so zu koppeln, dass sich das mindestens erste Gewicht (13a-c) um die Raddrehachse (9) in Reaktion auf die Drehung des Rades (5) um die Raddrehachse (9) bewegt.

13. Fahrzeug (1) nach Anspruch 12, wobei:

das Fahrzeug (1) ferner ein Bremssystem (27) umfasst, betreibbar ist, um in Reaktion auf eine Bremsanforderung ein Verzögerungsmoment auf das Rad (5) anzuwenden; und
die Kupplung (29) konfiguriert ist, um das Antriebskraftkontrollsystem (11) in Reaktion auf die Bremsanforderung mit dem Rad (5) zu koppeln.

14. Verfahren zur Steuerung des Fahrzeugs (1) nach Anspruch 13, das die folgenden Schritte umfasst:

Empfangen (S1) einer Bremsanforderung; und
Steuern (S2) der Kupplung (29), um das Antriebskraftkontrollsystem (11) als Reaktion auf die Bremsanforderung mit dem Rad (5) zu koppeln.

15. Computerprogramm, das so konfiguriert ist, dass es, wenn es auf einem in dem Fahrzeug (1) enthaltenen Prozessor (7) nach Anspruch 13 ausgeführt wird, den Prozessor (7) veranlasst, die Schritte des Verfahrens nach Anspruch 14 auszuführen.

**Revendications**

1. Système de contrôle de traction (11) pour le contrôle d'une force de contact (F) entre une roue (5) tournant autour d'un axe de rotation de roue (9) et une surface de contact (6), le système de contrôle de traction (11) comprenant :

au moins un premier poids (13a-c) contrôlable pour tourner autour de l'axe de rotation de roue (9) lorsque le système de contrôle de traction (11) est couplé à la roue (5) ; et **caractérisé par** un dispositif de guidage de poids (15) configuré pour guider le premier poids (13a-c) de manière à ce que, lorsque le premier poids (13a-c) bouge autour de l'axe de rotation de roue (9), un centre de gravité du premier poids (13a-c) suit une première trajectoire définie par le dispositif de guidage de poids (15), la première trajectoire présentant une première section avec un premier rayon ($R_1$) de courbure, et une seconde section avec un second rayon ($R_2$) de courbure supérieur au premier rayon ($R_1$) de courbure.

**2.** Système de contrôle de traction (11) selon la revendication 1, dans lequel le dispositif de guidage de poids (15) comprend :

un premier élément de guidage (17) couplé au premier poids (13a-c) et conçu pour tourner autour de l'axe de rotation de roue (9) lorsque le système de contrôle de traction (11) est couplé à la roue (5), le premier élément de guidage (17) définissant la seconde section de la trajectoire ayant le second rayon ($R_2$) de courbure ; et un second élément de guidage (19a-c) couplé au premier élément de guidage (17) et au premier poids (13a-c) et conçu pour tourner, en réaction à la rotation du premier élément de guidage (17), autour d'un axe de rotation de poids (23) parallèle et décalé de l'axe de rotation de roue (9), le second élément de guidage (19a-c) définissant la première section de la trajectoire ayant le premier rayon ($R_1$) de courbure.

**3.** Système de contrôle de traction (11) selon la revendication 2, dans lequel le premier poids (13a-c) est couplé au premier élément de guidage (17) de manière à ce que le premier poids (13a-c) bouge autour de l'axe de rotation de roue (9) en réaction à la rotation du premier élément de guidage (17).

**4.** Système de contrôle de traction (11) selon la revendication 2 ou 3, dans lequel :

le premier poids (13a-c) est couplé au premier élément de guidage (17) de manière à ce que le premier poids (13a-c) soit mobile radialement par rapport au premier élément de guidage (17) ; et le premier poids (13a-c) est couplé au second élément de guidage (19a-c) de manière à ce que le premier poids (13a-c) soit mobile radialement par rapport au second élément de guidage (19a-c).

**5.** Système de contrôle de traction (11) selon l'une quelconque des revendications précédentes, dans lequel :

le système de contrôle de traction (11) comprend un deuxième poids (13a-c) contrôlable pour le faire bouger autour de l'axe de rotation de roue (9) lorsque le système de contrôle de traction (11) est couplé à la roue (5) ; et le dispositif de guidage de poids (15) est configuré pour guider le deuxième poids (13a-c) de manière à ce que, lorsque le deuxième poids (13a-c) bouge autour de l'axe de rotation de roue (9), un centre de gravité du deuxième poids (13a-c) suive une seconde trajectoire définie par le dispositif de guidage de poids (15), la seconde trajectoire présentant une première section dotée d'un premier rayon ($R_1$) de courbure, et une seconde section dotée d'un second rayon ($R_2$) de courbure supérieur au premier rayon ($R_1$) de courbure

**6.** Système de contrôle de traction (11) selon la revendication 5, dans lequel :

le premier rayon ($R_1$) de courbure de la seconde trajectoire est égal au premier rayon ($R_1$) de courbure de la première trajectoire ; et le second rayon ($R_2$) de courbure de la seconde trajectoire est égal au second rayon ($R_2$) de courbure de la première trajectoire.

**7.** Système de contrôle de traction (11) selon la revendication 6, dans lequel la seconde trajectoire du centre de gravité du deuxième poids (13a-c) est identique à la première trajectoire du centre de gravité du premier poids (13a-c).

**8.** Système de contrôle de traction (11) selon la revendication 6 ou 7, dans lequel les poids (13a-c) compris dans le système de contrôle de traction (11) sont répartis angulairement de manière homogène autour de l'axe de rotation de roue (9).

**9.** Système de contrôle de traction (11) selon la revendication 1, dans lequel :

le système de contrôle de traction (11) comprend un premier poids (13a), un deuxième poids (13b) et un troisième poids (13) ; le dispositif de guidage de poids (15) comprenant :

un premier élément de guidage (17) conçu pour tourner autour de l'axe de rotation de roue (9), le premier élément de guidage (17) comprenant une première fente s'étendant radialement (25a) abritant le premier poids (13a), limitant le mouvement du premier poids (13a) le long de la première fente s'étendant radialement (25a), et définissant une première distance maximale ($r_{max}$) entre l'axe de rotation de roue et le premier poids ; une deuxième fente s'étendant radialement (25b) abritant le deuxième poids (13b), limitant le mouvement du deuxième poids (13b) le long de la deuxième fente s'étendant radialement (25b), et définissant une deuxième distance maximale ($r_{max}$) entre l'axe de rotation de roue et le deuxième poids ; et une troisième fente s'étendant radialement (25c) abritant le troisième poids (13c), limitant le mouvement du troisième poids (13c) le long de la troisième fente s'étendant radialement (25c), et définissant une troisième distance maximale ($r_{max}$) entre l'axe de rotation de roue et le troisième poids ; et

un second élément de guidage (19a-c) conçu pour tourner autour d'un axe de rotation de poids (23) parallèle à et décalé de l'axe de rotation de roue (9),

le premier poids (13a) étant couplé au second élément de guidage (19a) pour tourner à une première distance maximale (r) de l'axe de rotation de roue (23), le deuxième poids (13b) étant couplé au second élément de guidage (19b) pour tourner à une deuxième distance maximale (r) de l'axe de rotation de roue (23), et le troisième poids (13c) étant couplé au second élément de guidage (19c) pour tourner à une troisième distance maximale (r) de l'axe de rotation de roue (23).

10. Véhicule (1) comprenant :

un corps de véhicule (3) ;
une roue (5) conçue pour tourner autour d'un axe de rotation de roue (9) par rapport au corps de véhicule (3) tout en étant en contact avec une surface de contact (6) ; et
le système de contrôle de traction (11) selon l'une quelconque des revendications précédentes contrôlable pour être couplé à la roue (5) de manière à ce que l'au moins un premier poids (13a-c) du système de contrôle de traction (11) bouge autour de l'axe de rotation de roue (9).

11. Véhicule (1) selon la revendication 10, dans lequel la première trajectoire définie par le dispositif de guidage de poids (15) compris dans le système de contrôle de traction (11) présente le deuxième rayon ($R_2$) de courbure entre l'axe de rotation de roue (9) et la surface de contact (6), et présente le premier rayon ($R_1$) de courbure plus loin de la surface de contact (6) que l'axe de rotation de roue (9).

12. Véhicule (1) selon la revendication 10 ou 11, dans lequel le véhicule (1) comprend un accouplement (29) contrôlable pour coupler le système de contrôle de traction (11) à la roue (5) de manière à ce que l'au moins un poids (13a-c) bouge autour de l'axe de rotation de roue (9) en réaction à la rotation de la roue (5) autour de l'axe de rotation de roue (9).

13. Véhicule (1) selon la revendication 12, dans lequel :

le véhicule (1) comprend en outre un système de freinage (27) actionnable pour appliquer un couple de retardement à la roue (5) en réaction à une demande de freinage ; et

l'accouplement (29) est configuré pour coupler le système de contrôle de traction (11) à la roue (5) en réaction à la demande de freinage.

14. Procédé de contrôle du véhicule (1) selon la revendication 13, comprenant les étapes de :

réception (S1) d'une demande de freinage ; et
contrôle (S2) de l'accouplement (29) pour coupler le système de contrôle de traction (11) à la roue (5) en réaction à la demande de freinage.

15. Programme informatique configuré pour, une fois exécuté sur un processeur (7) compris dans le véhicule (1) selon la revendication 13, amener le processeur (7) à réaliser les étapes du procédé selon la revendication 14.

Fig. 1

*Fig. 2*

EP 3 924 194 B1

Fig. 3A

*Fig. 3B*

Fig. 3C

*31*

*7*

*33*

*35*

*27*

*29*

## Fig. 4

Receive braking request — S1

Couple traction ctrl system to wheel — S2

## Fig. 5

**REFERENCES CITED IN THE DESCRIPTION**

**Patent documents cited in the description**

- US 20050110331 A